# EUROPEAN PATENT APPLICATION

(11) **EP 4 852 109 A1**
(43) Date of publication of application: **09.12.2026**
(21) Application number: 25761397.6
(22) Date of filing: 17.02.2025
(51) Int. Cl.: H01M 8/1004, H01M 4/86, H01M 4/92, H01M 8/10, H01M 8/023

(54) **MEMBRANE ELECTRODE ASSEMBLY AND POLYMER ELECTROLYTE FUEL CELL**

(30) Priority: 28.02.2024 JP 2024028005
(71) Applicant: National Institute of Advanced Industrial Science and Technology, Chiyoda-ku Tokyo 100-8921 (JP)
(72) Inventor: ASAHI Masafumi, Tsukuba-shi, Ibaraki 305-8560 (JP); YAMAZAKI Shinichi, Tsukuba-shi, Ibaraki 305-8560 (JP); IOROI Tsutomu, Tsukuba-shi, Ibaraki 305-8560 (JP)
(74) Representative: Watermeyer, Nicholas
(86) International application number: PCT/JP2025/005162
(87) International publication number: WO 2025/182638

(57) **Abstract**

The present invention provides a membrane electrode assembly which has improved cell characteristics over a long period of time. The membrane electrode assembly comprises a cathode gas diffusion layer, a cathode catalyst layer, a solid polymer electrolyte membrane, an anode catalyst layer, and an anode gas diffusion layer. The cathode catalyst layer comprises catalyst particles that contain platinum. At least one among the cathode gas diffusion layer, the anode catalyst layer, and the anode gas diffusion layer contains at least one melamine-based compound that is a compound represented by chemical formula (1), a salt of the compound, or a polymer of the compound. In chemical formula (1), R¹ to R³ are each independently an amino group, an alkyl group, an alkylamino group, a thioalkylamino group, or an alkylaminosulfonic acid group.

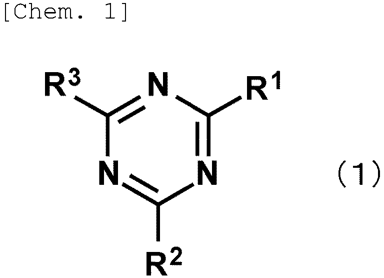

## Description

### TECHNICAL FIELD

The present application relates to a membrane electrode assembly containing a melamine-based compound at a predetermined portion and a polymer electrolyte fuel cell including the membrane electrode assembly.

### BACKGROUND ART

Platinum or platinum alloys have been used as catalysts for cathode electrodes of polymer electrolyte fuel cells (PEFCs). The activity of such platinum or platinum alloy catalysts gradually decreases with an operating time of the PEFCs. A cathode electrode with Pt/C catalyst particles each having a surface coated with a nitrogen-containing carbon film in order to improve initial activity and durability of the cathode electrode is disclosed in Patent Document 1. The nitrogen-containing carbon film is obtained by pyrolyzing a film composed of a mixture of polymelamine and polydopamine, which is coated on the surface of each of the Pt/C catalyst particles, at 700°C.

### Citation List

### Patent Documents

Patent Document 1: Japanese Unexamined Patent Application Publication No. 2022-142887

### DISCLOSURE OF THE INVENTION

### Problems to be Solved by the Invention

Production of the cathode electrode in Patent Document 1 requires a high-temperature treatment. The present inventors have found that activity and durability of PEFCs can be improved without the need for such a high-temperature treatment by including a melamine-based compound in a platinum-containing cathode catalyst layer. Under these circumstances, there is a need for even higher activity and durability of the PEFCs. An object of the present application is to provide a membrane electrode assembly with an improved cell property over a long period of time and a polymer electrolyte fuel cell including the membrane electrode assembly.

### Means for Solving the Problems

A membrane electrode assembly of the present application includes a cathode gas diffusion layer, a cathode catalyst layer, a solid polymer electrolyte membrane, an anode catalyst layer, and an anode gas diffusion layer, the cathode catalyst layer including platinum-containing catalyst particles, at least one of the cathode gas diffusion layer, the anode catalyst layer, or the anode gas diffusion layer containing one or more melamine-based compounds of a compound represented by Chemical Formula (1) below, a salt of the compound, or a polymer of the compound. In Chemical Formula (1), R¹ to R³ are each independently an amino group, an alkyl group, an alkylamino group, a thioalkylamino group, or an alkylamino sulfonic acid group.

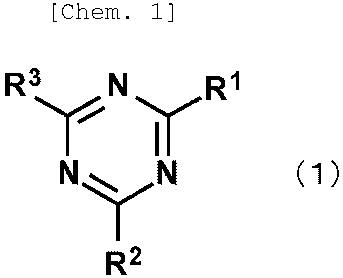

A polymer electrolyte fuel cell of the present application includes a membrane electrode assembly of the present application, a cathode separator, and an anode separator.

### Effects of the Invention

A membrane electrode assembly of the present application contains a predetermined melamine-based compound in one or more of an anode catalyst layer, a cathode gas diffusion layer, or an anode gas diffusion layer. Therefore, this melamine-based compound is gradually supplied to catalyst particles in a cathode catalyst layer while suppressing excessive adsorption of the melamine-based compound on the catalyst particles in the cathode catalyst layer. As a result, a cell property of the membrane electrode assembly is improved over a longer period of time.

### BRIEF DESCRIPTION OF THE DRAWINGS

FIG. 1: (a) Current-voltage curves for MEAs of Example 1-1 and Reference Example 1 when air is supplied to a cathode electrode, (b) Current-voltage curves in a low current density region of the current-voltage curves in (a);
FIG. 2: (a) Current-voltage curves for MEAs of Example 1-2 and Reference Example 1 when air is supplied to a cathode electrode, (b) Current-voltage curves in a low current density region of the current-voltage curves in (a);
FIG. 3: Cyclic voltammograms per unit mass of platinum for MEAs of Example 1-1 and Reference Example 1 after air is supplied to a cathode electrode;
FIG. 4: Cyclic voltammograms per unit mass of platinum for MEAs of Example 1-2 and Reference Example 1 after air is supplied to a cathode electrode;
FIG. 5: (a) Current-voltage curves for MEAs of Example 1-1 and Reference Example 1 when oxygen is supplied to a cathode electrode, (b) Current-voltage curves in a low current density region of the current-voltage curves in (a);
FIG. 6: Cyclic voltammograms per unit mass of platinum for MEAs of Example 1-1 and Reference Example 1 after oxygen is supplied to a cathode electrode;
FIG. 7: Cyclic voltammograms (CV1) per unit mass of platinum for MEAs of Example 2-1 and Reference Example 2 after oxygen is supplied to a cathode electrode;
FIG. 8: (a) Current-voltage curves (Current-voltage curve 1) for MEAs of Example 2-1 and Reference Example 1 when oxygen is supplied to a cathode electrode, (b) Current-voltage curves in a low current density region of the current-voltage curves in (a); FIG. 9: Other cyclic voltammograms (CV2) per unit mass of platinum for MEAs of Example 2-1 and Reference Example 2;
FIG. 10: (a) Other current-voltage curves (Current-voltage curve 2) for MEAs of Example 2-1 and Reference Example 1, (b) Current-voltage curves in a low current density region of the current-voltage curves in (a);
FIG. 11: Still other cyclic voltammograms (CV3) per unit mass of platinum for MEAs of Example 2-1 and Reference Example 2;
FIG. 12: (a) Still other current-voltage curves (Current-voltage curve 3) of MEAs of Example 2-1 and Reference Example 1, (b) Current-voltage curves in a low current density region of the current-voltage curves in (a);
FIG. 13: Cyclic voltammograms (CV3) per unit mass of platinum for MEAs of Example 2-2 and Reference Example 2;
FIG. 14: (a) Current-voltage curves (Current-voltage curve 3) for MEAs of Example 2-2 and Reference Example 2, (b) Current-voltage curves in a low current density region of the current-voltage curves in (a);
FIG. 15: Cyclic voltammograms (CV3) per unit mass of platinum for MEAs of Comparative Example and Reference Example 3;
FIG. 16: (a) Current-voltage curves (Current-voltage curve 3) for MEAs of Comparative Example and Reference Example 3, (b) Current-voltage curves in a low current density region of the current-voltage curves in (a);
FIG. 17: Current-voltage curves in a low current density region of the current-voltage curves per unit mass of platinum in FIG. 1(a);
FIG. 18: Current-voltage curves in a low current density region of the current-voltage curves per unit mass of platinum in FIG. 2(a);
FIG. 19: Current-voltage curves in a low current density region of the current-voltage curves per unit mass of platinum in FIG. 5(a);
FIG. 20: Current-voltage curves in a low current density region of the current-voltage curves per unit mass of platinum in FIG. 8(a);
FIG. 21: Current-voltage curves in a low current density region of the current-voltage curves per unit mass of platinum in FIG. 10(a);
FIG. 22: Current-voltage curves in a low current density region of the current-voltage curves per unit mass of platinum in FIG. 12(a);
FIG. 23: Current-voltage curves in a low current density region of the current-voltage curves per unit mass of platinum in FIG. 14(a); and
FIG. 24: Current-voltage curves in a low current density region of the current-voltage curves per unit mass of platinum in FIG. 16(a).

### PREFERRED MODE FOR CARRYING OUT THE INVENTION

A membrane electrode assembly and a polymer electrolyte fuel cell of the present application will be described below based on embodiments and examples. When the term "to" is used in the present application to denote a range between two numerical values, these two numerical values are also included in this range. Note that duplicate explanations are omitted as appropriate. A polymer electrolyte fuel cell of an embodiment of the present application includes a cathode separator, a cathode electrode, a solid polymer electrolyte membrane, an anode electrode, and an anode separator in this order. A membrane electrode assembly of the present application includes a cathode electrode, a solid polymer electrolyte membrane (hereinafter may be simply referred to as "electrolyte membrane"), and an anode electrode in this order.

The cathode electrode includes a cathode gas diffusion layer and a cathode catalyst layer. The cathode gas diffusion layer diffuses an oxygen-containing gas supplied to the cathode electrode and uniformly supplies this gas to the cathode catalyst layer. The cathode gas diffusion layer is composed of a carbon material having gas permeability, for example, carbon paper mainly composed of carbon fibers. The cathode catalyst layer produces water from a proton, an electron, and oxygen. The cathode catalyst layer includes catalyst particles. The catalyst particles contain platinum. The catalyst particles are, for example, particles in which platinum or a platinum alloy is supported on a carbon support.

In the solid polymer electrolyte membrane, passage of electrons and gases is blocked, and protons move from the anode electrode to the cathode electrode. The solid polymer electrolyte membrane is composed of a proton-conducting polymeric material, such as a fluororesin with a sulfonic acid group. The cathode electrode may further include a cathode water-repellent layer between the cathode gas diffusion layer and the cathode catalyst layer. The cathode water-repellent layer is obtained, for example, by subjecting one side of the cathode gas diffusion layer to a water-repellent treatment.

The anode electrode includes an anode gas diffusion layer and an anode catalyst layer. The anode gas diffusion layer diffuses a hydrogen-containing gas supplied to the anode electrode and uniformly supplies this gas to the anode catalyst layer. The anode gas diffusion layer is composed of a carbon material having gas permeability, for example, carbon paper mainly composed of carbon fibers. The anode catalyst layer decomposes hydrogen into protons and electrons. The anode catalyst layer includes catalyst particles. The catalyst particles are, for example, particles in which platinum or a platinum alloy is supported on a carbon support. An anode water-repellent layer may be further provided between the anode gas diffusion layer and the anode catalyst layer. The anode water-repellent layer is obtained, for example, by subjecting one side of the anode gas diffusion layer to a water repellent treatment.

At least one of the cathode gas diffusion layer, the anode catalyst layer, or the anode gas diffusion layer contains one or more melamine-based compounds of a compound represented by Chemical Formula (1) below, a salt of the compound, or a polymer of the compound. In Chemical Formula (1), R¹ to R³ are each independently an amino group, an alkyl group, an alkylamino group, a thioalkylamino group, or an alkylamino sulfonic acid group.

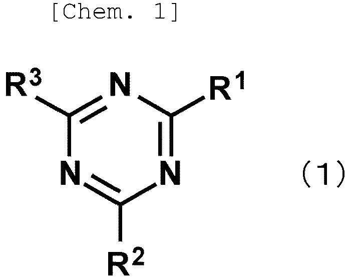

The melamine-based compound may be contained in, for example, the cathode gas diffusion layer in a form of melamine cyanurate, etc. When the melamine-based compound is in a form of a salt, the melamine-based compound is a salt including, as a cation, the compound represented by Chemical Formula (1). The alkyl group preferably has 1 to 16 carbon atoms and more preferably 1 to 8 carbon atoms. The alkylamino group, the thioalkylamino group, or the alkylamino sulfonic acid group has preferably 1 to 16 carbon atoms, more preferably 1 to 12 carbon atoms, and further preferably 1 to 8 carbon atoms.

The melamine-based compound contained in the cathode gas diffusion layer is gradually supplied to the catalyst particles in the cathode catalyst layer. The melamine-based compound contained in the anode catalyst layer passes through the solid polymer electrolyte membrane and is gradually supplied to the catalyst particles in the cathode catalyst layer. The melamine-based compound contained in the anode gas diffusion layer passes through the cathode catalyst layer and the solid polymer electrolyte membrane and is gradually supplied to the catalyst particles in the cathode catalyst layer. Therefore, excessive adsorption of the melamine-based compound on the catalyst particles in the cathode catalyst layer can be prevented.

As a result, a cell property of a membrane electrode assembly containing a melamine-based compound in at least one of a cathode gas diffusion layer, an anode catalyst layer, or an anode gas diffusion layer is superior over a longer period of time compared to a cell property of a membrane electrode assembly containing no melamine-based compound or a cell property of a membrane electrode assembly in which only a cathode catalyst layer contains a melamine-based compound. Examples of the melamine-based compound include acetoguanamine, a melamine monomer, octylmelamine, etc. One or more of these melamine-based compounds are preferably included in at least one of the cathode gas diffusion layer, the anode catalyst layer, or the anode gas diffusion layer.

A ratio of a mass of the melamine-based compound to a mass of platinum included in the cathode catalyst layer is preferably 0.5% to 20%, more preferably 1% to 15%, and further preferably 2% to 10%. The melamine-based compound does not include calcined melamine. The calcined melamine is a substance including carbon as a main component obtained by calcining the melamine-based compound at around 700°C, for example. Even if the cathode gas diffusion layer, the anode catalyst layer, or the anode gas diffusion layer includes the calcined melamine, the calcined melamine is not supplied to the catalyst particles in the cathode catalyst layer.

Only the cathode gas diffusion layer may contain the melamine-based compound, or only the anode catalyst layer may contain the melamine-based compound. When the melamine-based compound is contained in the anode catalyst layer or the anode gas diffusion layer, a solid polymer electrolyte membrane through which the melamine-based compound can pass is to be used. In such a case, a general solid polymer electrolyte membrane rather than a special solid polymer electrolyte membrane can be used. The invention of the present application will be described in more detail with reference to Examples and Comparative Examples. The invention of the present application is not limited to the following Examples.

### EXAMPLES

### (Example 1: Supply of melamine-based compound from cathode gas diffusion layer to cathode catalyst layer)

First, 430 mg of 1-propanol (FUJIFILM Wako Pure Chemical Corporation (the same applies hereinafter)), 50 mg of platinum catalyst particles (TANAKA PRECIOUS METAL TECHNOLOGIES Co., Ltd., TEC10V30E), which are platinum supported on a carbon support and constitute a cathode catalyst, and 140 mg of an ionomer (FUJIFILM Wako Pure Chemical Corporation, DE2021) were mixed under a nitrogen atmosphere to obtain a dispersion liquid for a cathode catalyst. A ratio of a mass of the ionomer to a total mass of the carbon support in the platinum catalyst particles was 0.8. This dispersion liquid for a cathode catalyst was applied to obtain a cathode catalyst sheet. Small pieces of 10 mm square were cut out of the cathode catalyst sheet and used as a cathode catalyst layer.

An anode catalyst layer was obtained in the same manner and the same ionomer ratio as for the cathode catalyst layer, except that other platinum catalyst particles which are platinum supported on a carbon support (TANAKA PRECIOUS METAL TECHNOLOGIES Co., Ltd., TEC10E50E) were used. An electrolyte membrane (Chemours, Nafion 212 (the same applies hereinafter)) of 7 cm in length, 7 cm in width, and 0.051 mm in thickness was sandwiched between the cathode catalyst layer and the anode catalyst layer and then subjected to hot-pressing to obtain a laminate.

Carbon paper (SGL Carbon, 22BB) which has a water-repellent layer on one side and is 11.5 mm in length, 11.5 mm in width, and 0.215 mm in thickness was attached to a cathode side of the laminate, with a side of the water-repellent layer facing the cathode catalyst layer. This carbon paper serves as a cathode gas diffusion layer (cathode GDL). The carbon paper was also attached to an anode side with a side of the water-repellent layer facing the anode catalyst layer to produce a MEA of Reference Example 1. This carbon paper serves as a cathode gas diffusion layer (cathode GDL). A Pt mass per unit area of the cathode catalyst layer in the MEA of Reference Example 1 was 0.161 mg_{Pt}cm⁻² (MEA as evaluated with air) or 0.171 mg_{Pt}cm⁻² (MEA as evaluated with oxygen).

A side of the water-repellent layer (MPL) of the cathode GDL in the MEA of Reference Example 1 was impregnated with 50 µL of a 1.5 mM solution of acetoguanamine (AG) (Tokyo Chemical Industry Co., Ltd.) serving as a melamine-based compound in acetone and dried. Thus, a MEA of Example 1-1 including the AG in the cathode GDL was obtained. A Pt mass per unit area of the cathode catalyst layer in the MEA of Example 1-1 was 0.175 mg_{Pt}cm⁻² (MEA as evaluated with air) or 0.177 mg_{Pt}cm⁻² (MEA as evaluated with oxygen). A ratio of a mass of the AG to a mass of platinum in the platinum catalyst particles included in the cathode catalyst layer of the MEA of Example 1-1 was 5.4%.

A MEA of Example 1-2 in which a cathode GDL included a melamine monomer (MM) was obtained in the same manner as for the MEA of Example 1-1, except that 50 µL of a 1.5 mM solution of MM (Tokyo Chemical Industry Co., Ltd. (the same applies hereinafter)) serving as a melamine-based compound in a mixed solvent of acetone and water at a ratio of 4:1 by volume was used instead of the AG solution. A Pt mass per unit area of the cathode catalyst layer in the MEA of Example 1-2 was 0.144 mg_{Pt}cm⁻². A ratio of a mass of the MM to a mass of platinum in the platinum catalyst particles included in the cathode catalyst layer of the MEA of Example 1-2 was 6.6%.

Then, nitrogen gas was supplied to a cathode electrode to saturate it with nitrogen, supply of the nitrogen gas was stopped, and each of MEAs of Example 1-1, Example 1-2, and Reference Example 1 was evaluated for cyclic voltammetry at a sweep rate of 50 mV/s, 5 cycles while 70 sccm of hydrogen gas was supplied to an anode electrode. Next, MEAs of Example 1-1, Example 1-2, and Reference Example 1 were tested for power generation under power generation test conditions of a bubbler temperature of 73°C, a pipe temperature of 90°C, and a cell temperature of 78°C (81% RH) (hereinafter may be referred to as "first power generation test conditions") according to the following procedures.

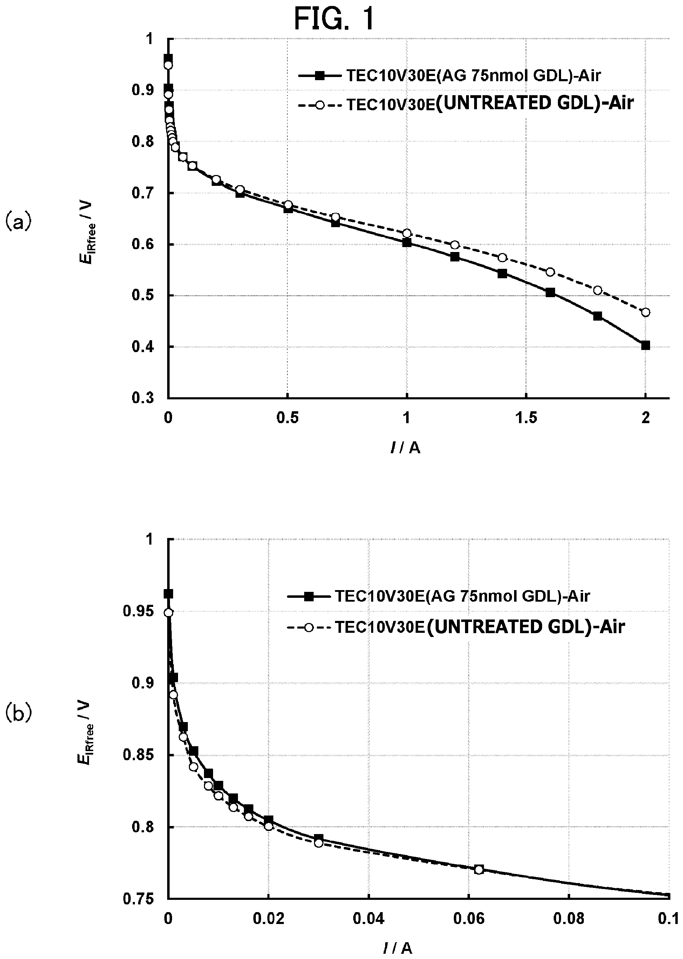

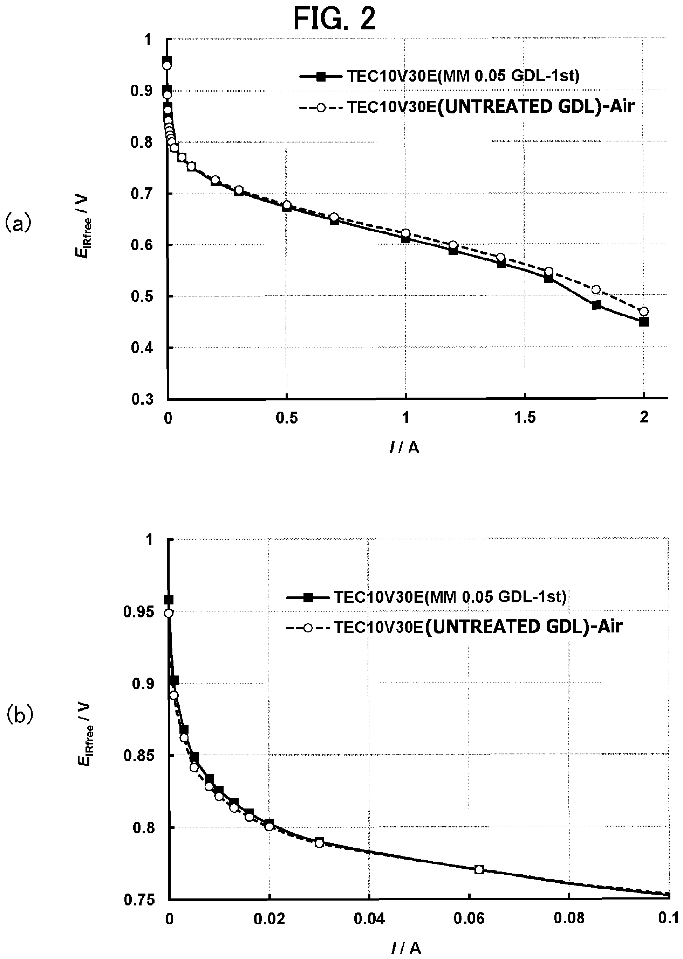

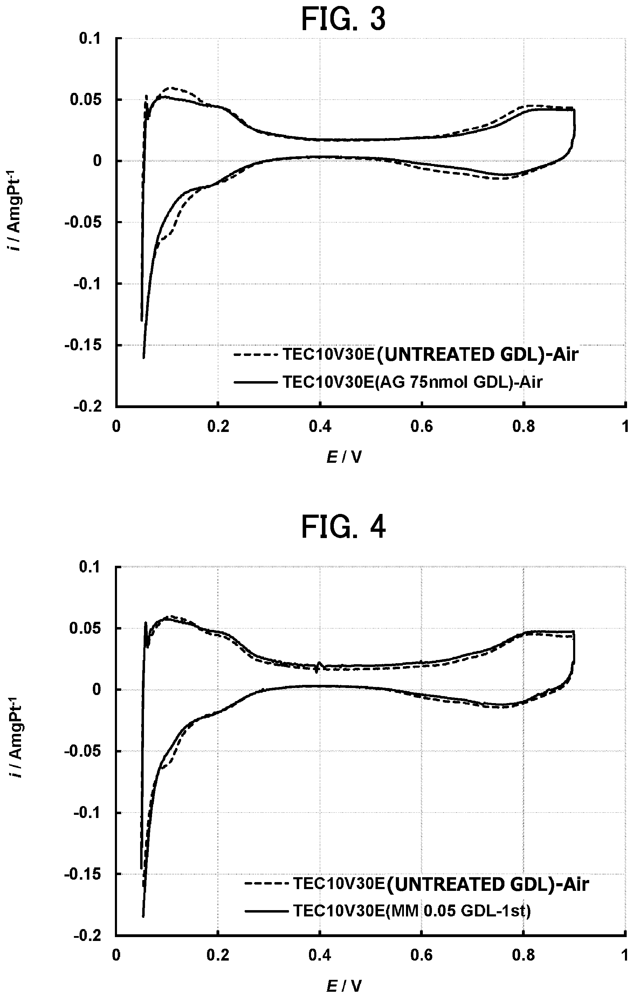

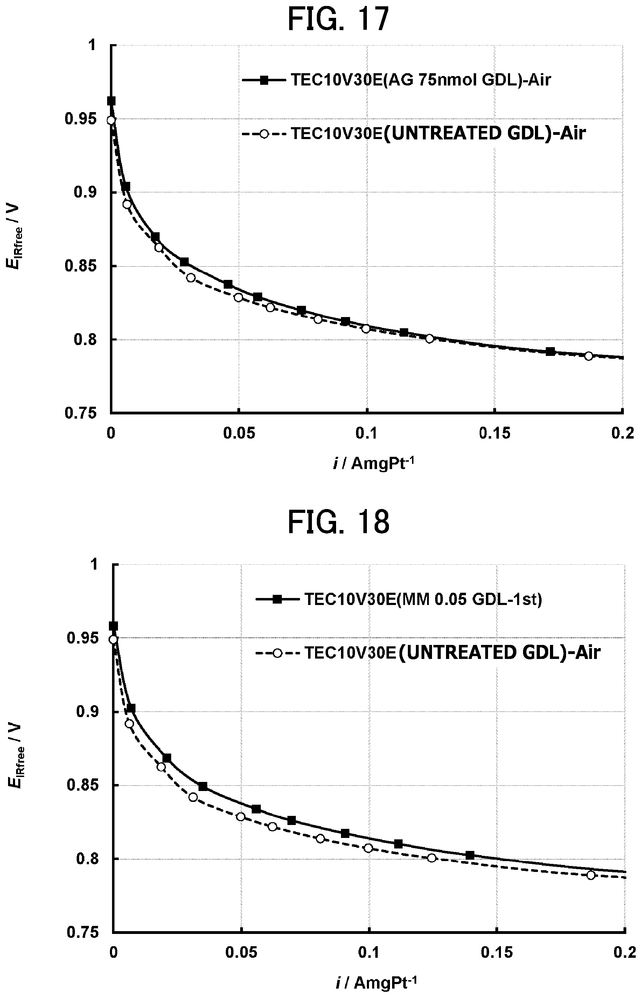

In other words, the MEAs were evaluated for an initial current-voltage property while supplying 500 sccm of air to the cathode electrode and 200 sccm of pure hydrogen gas to the anode electrode. The MEAs were then evaluated for a current-voltage property again by operating them at a constant voltage of 0.4 V for 4 hours while continuing to supply these gases to the MEAs. FIG. 1(a) shows current-voltage curves for the MEA of Example 1-1 ("TEC10V30E (AG 75 nmol GDL)-Air" in the figure (the same applies to FIG. 3)) and the MEA of Reference Example 1 ("TEC10V30E (untreated GDL)-Air" in the figure (the same applies to FIG. 2(a), FIG. 3, and FIG. 4)) when the MEAs were evaluated a second time as described above. FIG. 1(b) shows the current-voltage curves in FIG. 1(a) in a low current density region. FIG. 17 shows the current-voltage curves per unit mass of platinum in FIG. 1(a) in a low current density region.

FIG. 2(a) shows current-voltage curves for the MEA of Example 1-2 ("TEC10V30E (MM 0.05 GDL-1st)" in the figure (the same applies to FIG. 4)) and the MEA of Reference Example 1. FIG. 2(b) shows the current-voltage curves in FIG. 2(a) in a low current density region. FIG. 18 shows the current-voltage curves per unit mass of platinum in FIG. 2(a) in a low current density region. As shown in FIGs. 1(a), 1(b), 17, 2(a), 2(b), and 18, cell voltages of the MEAs of Examples 1-1 and 1-2, in which the cathode GDL was impregnated with the melamine-based compound, were higher than that of the MEA of Reference Example 1, in which the cathode GDL was not impregnated with the melamine-based compound, especially in the low current density region.

Thereafter, nitrogen gas was supplied to a cathode electrode to saturate it with nitrogen, supply of the nitrogen gas was stopped, and each of MEAs of Example 1-1, Example 1-2, and Reference Example 1 was evaluated for cyclic voltammetry at a sweep rate of 50 mV/s, 5 cycles while 70 sccm of hydrogen gas was supplied to an anode electrode. FIG. 3 shows cyclic voltammograms per unit mass of platinum for the MEA of Example 1-1 and the MEA of Reference Example 1 as evaluated as described above. Furthermore, FIG. 4 shows cyclic voltammograms per unit mass of platinum for the MEA of Example 1-2 and the MEA of Reference Example 1 as evaluated as described above.

As shown in FIGs. 3 and 4, waveforms of the cyclic voltammograms for the MEAs of Examples 1-1 and 1-2 are clearly different from a waveform of the cyclic voltammogram for the MEA of Reference Example 1. This change in waveform is believed to result from adsorption of an appropriate amount of the melamine-based compound on platinum in the cathode catalyst layer. This means that the melamine-based compound with which the cathode GDL has been impregnated is supplied to the cathode catalyst layer. From the above, a cell property was able to be improved by impregnating the cathode GDL with the melamine-based compound.

Next, another example is shown in which oxygen is supplied to the cathode electrode instead of air. First, nitrogen gas was supplied to a cathode electrode of a new MEA to saturate it with nitrogen, supply of the nitrogen gas was stopped, and each of MEAs of Example 1-1, Example 1-2, and Reference Example 1 was evaluated for cyclic voltammetry at a sweep rate of 50 mV/s, 5 cycles while 70 sccm of hydrogen gas was supplied to an anode electrode. Then, each of the MEAs of Example 1-1, Example 1-2, and Reference Example 1 was evaluated for an initial current-voltage property while supplying 200 sccm of oxygen to the cathode electrode and 200 sccm of pure hydrogen gas to the anode electrode under the first power generation test conditions. Next, the MEAs were then evaluated for a current-voltage property again by operating them at a constant voltage of 0.54 V for 4 hours.

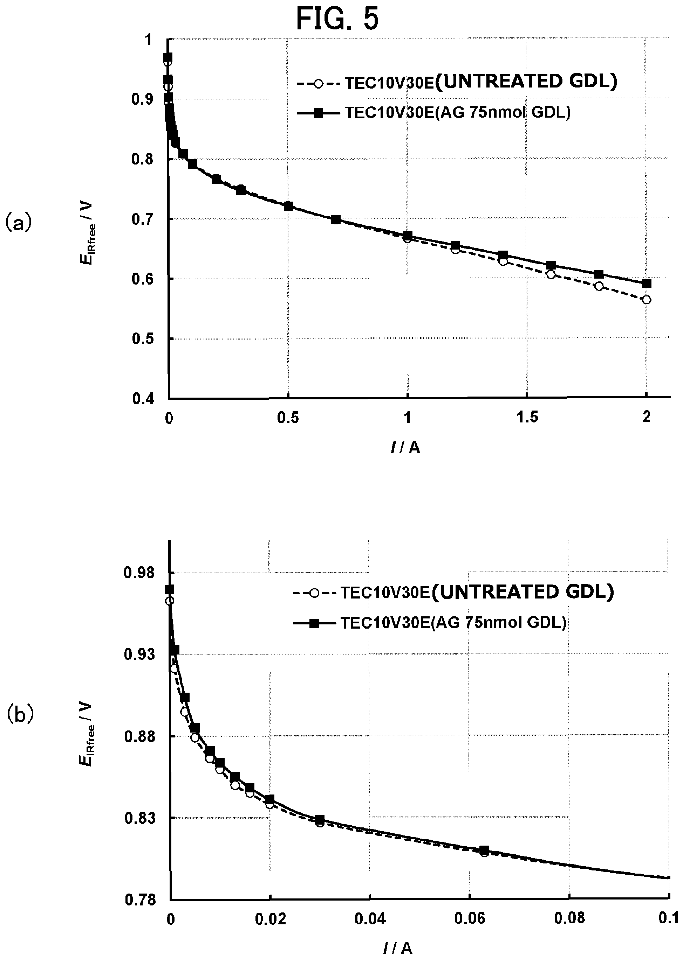

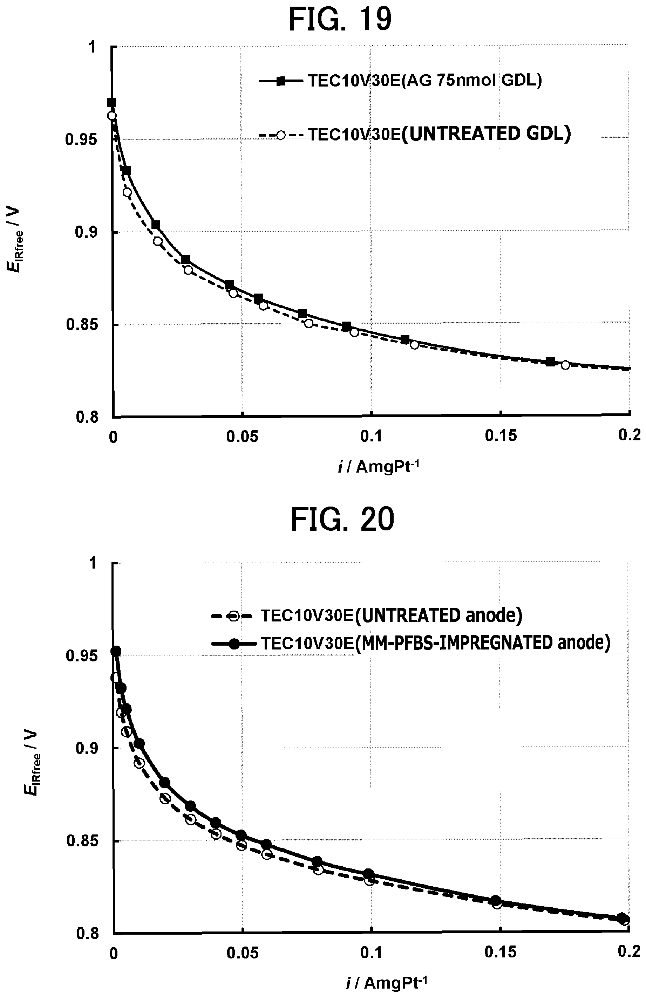

FIG. 5(a) shows current-voltage curves for the MEA of Example 1-1 ("TEC10V30E (AG 75 nmol GDL)" in the figure) and the MEA of Reference Example 1 ("TEC10V30E (untreated GDL)") when the MEAs were evaluated for a current-voltage property a second time as described above under the condition that oxygen was supplied to this cathode electrode. FIG. 5(b) shows the current-voltage curves in FIG. 5(a) in a low current density region. FIG. 19 shows the current-voltage curves per unit mass of platinum in FIG. 5(a) in a low current density region. As shown in FIGs. 5(a), 5(b), and 19, cell voltages of the MEAs of Examples 1-1 and 1-2, in which the cathode GDL was impregnated with the melamine-based compound, were higher than that of the MEA of Reference Example 1, in which the cathode GDL was not impregnated with the melamine-based compound, especially in the low current density region.

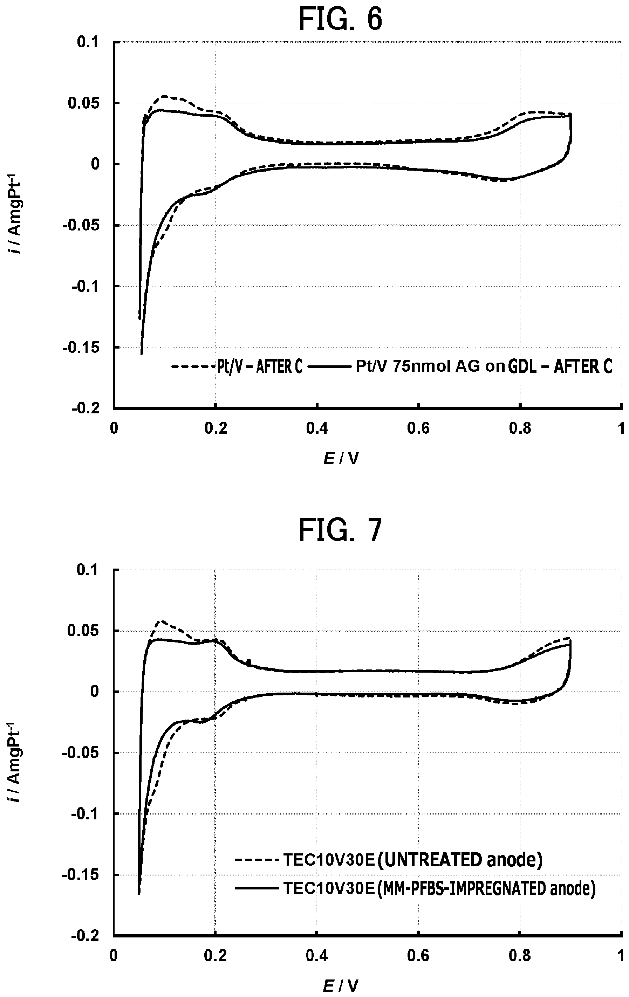

Thereafter, nitrogen gas was supplied to the cathode electrode to saturate it with nitrogen, supply of the nitrogen gas was stopped, and each of MEAs of Example 1-1, Example 1-2, and Reference Example 1 was evaluated for cyclic voltammetry at a sweep rate of 50 mV/s, 5 cycles while 70 sccm of hydrogen gas was supplied to the anode electrode. FIG. 6 shows cyclic voltammograms per unit mass of platinum for the MEA of Example 1-1 ("after Pt/V 75 nmol AG on GDL-C" in the figure) and the MEA of Reference Example 1 ("after Pt/V-C" in the figure) as evaluated as described above.

As shown in FIG. 6, a waveform of the cyclic voltammogram for the MEA of Example 1-1 is clearly different from a waveform of the cyclic voltammogram for the MEA of Reference Example 1. This change in waveform is believed to result from adsorption of the melamine-based compound on the cathode catalyst layer. In other words, even when power was generated by supplying oxygen to the cathode electrode, the melamine-based compound was supplied to the cathode catalyst layer by impregnating the cathode GDL with the melamine-based compound and a cell property was improved.

### (Example 2: Supply of melamine-based compound from anode catalyst layer to cathode electrode)

First, 344 µL of water, 246 µL of 1-propanol, 50 µL of ethylene glycol (FUJIFILM Wako Pure Chemical Corporation (the same applies hereinafter)), 50 mg of platinum catalyst particles (TEC10V30E, TANAKA PRECIOUS METAL TECHNOLOGIES Co., Ltd.), which are platinum supported on a carbon support and constitute a cathode catalyst, and 147 mg of an ionomer (FUJIFILM Wako Pure Chemical Corporation, DE2020) were mixed, and the resultant was dispersed with ultrasonication and stirred to obtain an ink for a cathode catalyst. The ink for a cathode catalyst was applied to a PTFE sheet (Nitto Denko Corporation (the same applies hereinafter)) at a thickness of 140 µm and vacuum-dried at 100°C to obtain a cathode catalyst sheet. A cathode catalyst layer was obtained by cutting the cathode catalyst sheet into a piece of 10 mm in length and 10 mm in width. A ratio of a mass of the ionomer to a total mass of the carbon support in the platinum catalyst particles was 0.83.

An aqueous solution containing equal moles of MM and nonafluorobutane-1-sulfonic acid (PFBS) (Merck) so as to be a total concentration of 3.81 mg mL⁻¹ was prepared. Then, 328 µL of the aqueous solution, 241 µL of 1-propanol, 50 µL of ethylene glycol, and 116 mg of an ionomer (FUJIFILM Wako Pure Chemical Corporation, DE2020) were added to 50 mg of platinum catalyst particles which are platinum supported on a carbon support (TANAKA PRECIOUS METAL TECHNOLOGIES Co., Ltd., TEC10E50E), and the resultant was dispersed with ultrasonication and stirred to obtain an ink for an anode catalyst.

The ink for an anode catalyst was applied to a PTFE sheet at a thickness of 100 µm and vacuum-dried at 100°C to obtain an anode catalyst sheet. An anode catalyst layer was obtained by cutting the anode catalyst sheet into a piece of 10 mm in length and 10 mm in width. Note that a ratio of a total mass of the MM and the PFBS to a mass of platinum in the platinum catalyst particles included in the anode catalyst layer was 0.053.

Carbon paper (Toray Industries, Inc., TGP-H-060) of 11 mm in length, 11 mm in width, and 0.19 mm in thickness serving as a cathode GDL, the cathode catalyst layer, an electrolyte membrane, the anode catalyst layer, and carbon paper with a water-repellent layer on one side (SGL Carbon, 22BB) serving as an anode GDL were laminated together in this order to obtain a MEA of Example 2-1 including a cathode electrode composed of the cathode GDL and the cathode catalyst layer, the electrolyte membrane, and an anode electrode composed of the anode catalyst layer and the anode GDL. A Pt mass per unit area of the cathode catalyst layer in the MEA of Example 2-1 was 0.203 mg_{Pt}cm⁻². A ratio of a total mass of the MM and the PFBS to a mass of platinum in the platinum catalyst particles included in the cathode catalyst layer of the MEA of Example 2-1 was 0.062.

A MEA of Reference Example 2 which did not include the melamine-based compound in the anode catalyst layer was obtained in the same manner as for the MEA of Example 2-1, except that an ink for an anode catalyst that did not include MM or PFBS was used. A Pt mass per unit area of the cathode catalyst layer in the MEA of Reference Example 2 was 0.202 mg_{Pt}cm⁻². Next, nitrogen gas was supplied to the cathode electrode to saturate it with nitrogen, supply of the nitrogen gas was stopped, and each of the MEAs of Example 2-1 and Reference Example 2 was evaluated for cyclic voltammetry at a sweep rate of 50 mV/s, 5 cycles while 70 sccm of hydrogen gas was supplied to the anode electrode.

Then, each of the MEAs of Example 2-1 and Reference Example 2 was tested for power generation under power generation test conditions of a bubbler temperature of 73°C, a pipe temperature of 85°C, and a cell temperature of 80°C (75% RH) (hereinafter may be referred to as "second power generation test conditions") according to the following procedures. First, the MEAs were evaluated for an initial current-voltage property after constant voltage operation at 0.5 V for 5 hours, constant voltage operation at 0.4 V for 2.5 hours, and constant voltage operation at 0.3 V for 2.5 hours sequentially while supplying 209 sccm of oxygen gas to the cathode electrode and 209 sccm of pure hydrogen gas to the anode electrode, respectively.

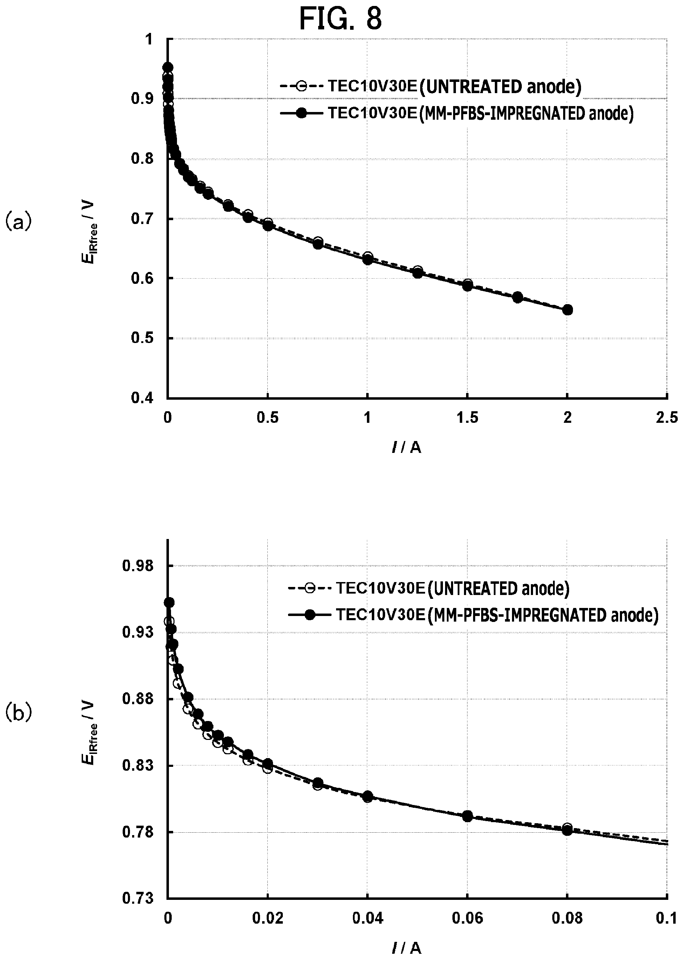

Then, nitrogen gas was supplied to the cathode electrode and the anode electrode to saturate them with nitrogen, heating of the MEA and a pipe, etc. was stopped to stop operation of the MEA, and then the MEA and the pipe, etc. were reheated to the second power generation test conditions. Each of the MEAs of Example 2-1 and Reference Example 2 was evaluated for cyclic voltammetry at a sweep rate of 50 mV/s, 5 cycles while 70 sccm of hydrogen gas was supplied to the anode electrode. FIG. 7 shows cyclic voltammograms (CV1) per unit mass of platinum for the MEA of Example 2-1 ("TEC10V30E (MM-PFBS-impregnated anode)" in the figure (the same applies to FIGs. 8(a) to 12(b) and FIGs. 20 to 22)) and the MEA of Reference Example 2 ("TEC10V30E (untreated anode)" in the figure (the same applies to FIGs. 8(a) to 13 and 20 to 23)) as evaluated as described above.

As shown in FIG. 7, a waveform of the cyclic voltammogram for the MEA of Example 2-1 is clearly different from a waveform of the cyclic voltammogram for the MEA of Reference Example 2. This change in waveform is believed to result from adsorption of the melamine-based compound on the cathode catalyst layer. This means that the melamine-based compound included in the anode catalyst layer is supplied to the cathode catalyst layer through the electrolyte membrane.

Next, each of the MEAs of Example 2-1 and Reference Example 2 was evaluated again for a current-voltage property after constant voltage operation at 0.5 V for 10 minutes, constant voltage operation at 0.4 V for 10 minutes, and constant voltage operation at 0.3 V for 10 minutes sequentially while supplying 209 sccm of oxygen gas to the cathode electrode and 209 sccm of pure hydrogen gas to the anode electrode, respectively. FIG. 8(a) shows current-voltage curves (Current-voltage curve 1) for the MEAs of Example 2-1 and Reference Example 2 as evaluated as described above. FIG. 8(b) shows the current-voltage curves in FIG. 8(a) in a low current density region. FIG. 20 shows the current-voltage curves per unit mass of platinum in FIG. 8(a) in a low current density region. As shown in FIGs. 8(a), 8(b), and 20, a cell voltage of the MEA of Example 2-1, in which the anode catalyst layer was impregnated with the melamine-based compound, was higher than that of the MEA of Reference Example 2, in which the anode catalyst layer was not impregnated with the melamine-based compound, especially in the low current density region.

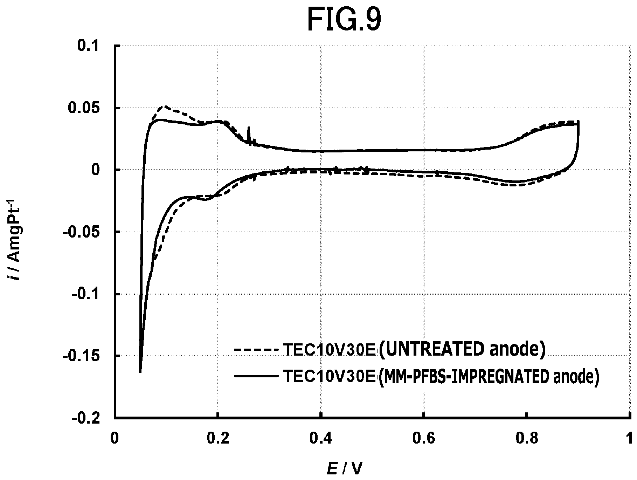

Then, each of the MEAs of Example 2-1 and Reference Example 2 was left under an over-humidified condition for 3 hours, dried with dry nitrogen, and subjected to the second power generation test conditions again. Each of the MEAs of Example 2-1 and Reference Example 2 was evaluated for cyclic voltammetry at a sweep rate of 50 mV/s, 5 cycles while supplying 70 sccm of hydrogen gas to the anode electrode. FIG. 9 shows cyclic voltammograms (CV2) per unit mass of platinum for the MEAs of Example 2-1 and Reference Example 2 as evaluated as described above.

As shown in FIG. 9, a waveform of the cyclic voltammogram for the MEA of Example 2-1 is clearly different from a waveform of the cyclic voltammogram for the MEA of Reference Example 2. This change in waveform is believed to result from adsorption of the melamine-based compound on the cathode catalyst layer. This means that the melamine-based compound included in the anode catalyst layer is supplied to the cathode catalyst layer through the electrolyte membrane.

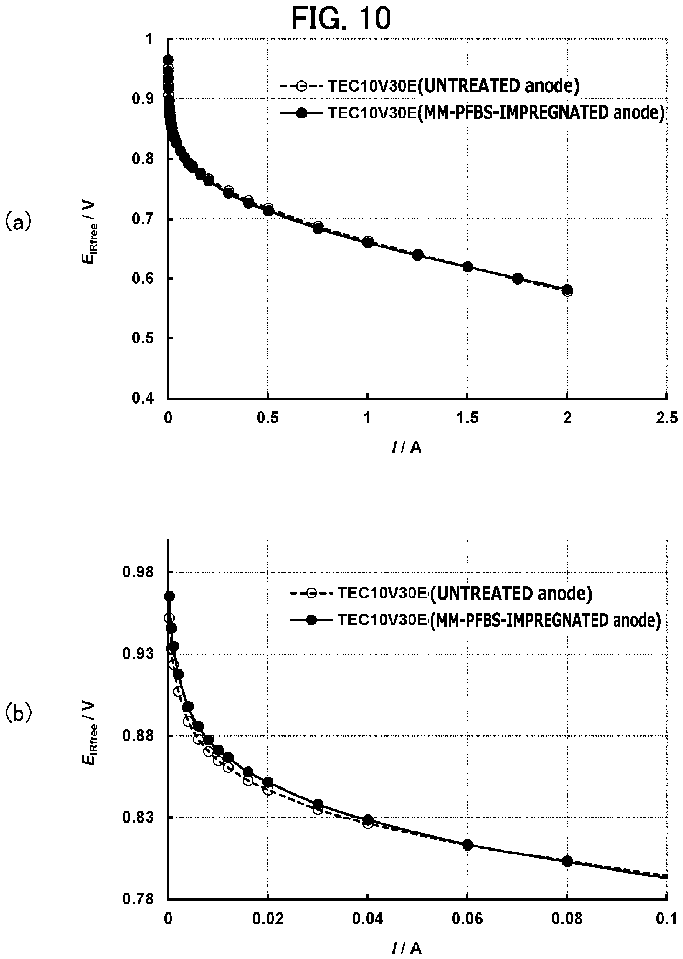

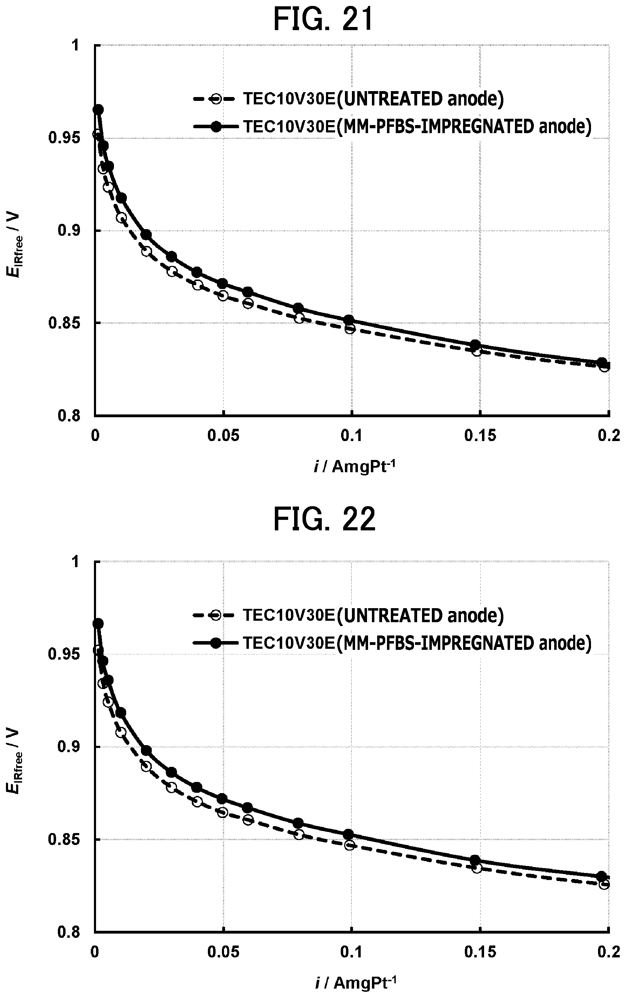

Next, each of the MEAs of Example 2-1 and Reference Example 2 was evaluated for a current-voltage property after constant voltage operation at 0.5 V for 10 minutes, constant voltage operation at 0.4 V for 10 minutes, and constant voltage operation at 0.3 V for 10 minutes sequentially while supplying 209 sccm of oxygen gas to the cathode electrode and 209 sccm of pure hydrogen gas to the anode electrode. FIG. 10(a) shows current-voltage curves (Current-voltage curve 2) for the MEAs of Example 2-1 and Reference Example 2 as evaluated as described above. FIG. 10(b) shows the current-voltage curves in FIG. 10(a) in a low current density region. FIG. 21 shows the current-voltage curves per unit mass of platinum in FIG. 10(a) in a low current density region. As shown in FIGs. 10(a), 10(b), and 21, a cell voltage of the MEA of Example 2-1, in which the anode catalyst layer was impregnated with the melamine-based compound, was higher than that of the MEA of Reference Example 2, in which the anode catalyst layer was not impregnated with the melamine-based compound, especially in the low current density region.

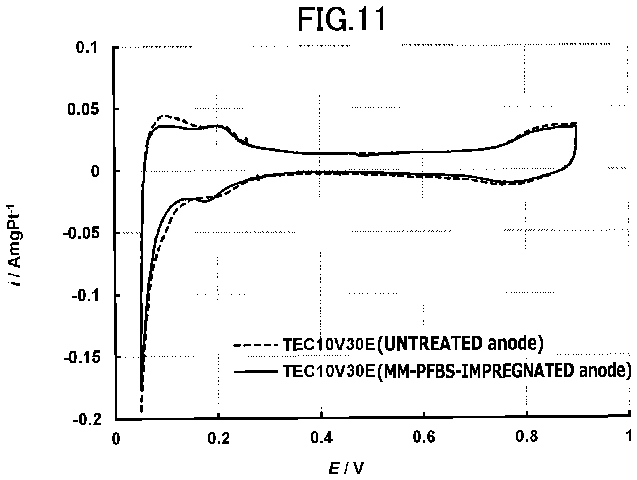

Then, each of the MEAs of Example 2-1 and Reference Example 2 was left under an over-humidified condition for 3 hours, dried with dry nitrogen, and subjected to the second power generation test conditions again. Each of the MEAs of Example 2-1 and Reference Example 2 was evaluated for cyclic voltammetry at a sweep rate of 50 mV/s, 5 cycles while supplying 70 sccm of hydrogen gas to the anode electrode. FIG. 11 shows cyclic voltammograms per unit mass of platinum for the MEAs of Example 2-1 and Reference Example 2 as evaluated as described above (hereinafter, a cyclic voltammogram per unit mass of platinum evaluated under such conditions may be referred to as "CV3").

As shown in FIG. 11, a waveform of the cyclic voltammogram for the MEA of Example 2-1 is clearly different from a waveform of the cyclic voltammogram for the MEA of Reference Example 2. This change in waveform is believed to result from adsorption of the melamine-based compound on the cathode catalyst layer. This means that the melamine-based compound included in the anode catalyst layer is supplied to the cathode catalyst layer through the electrolyte membrane.

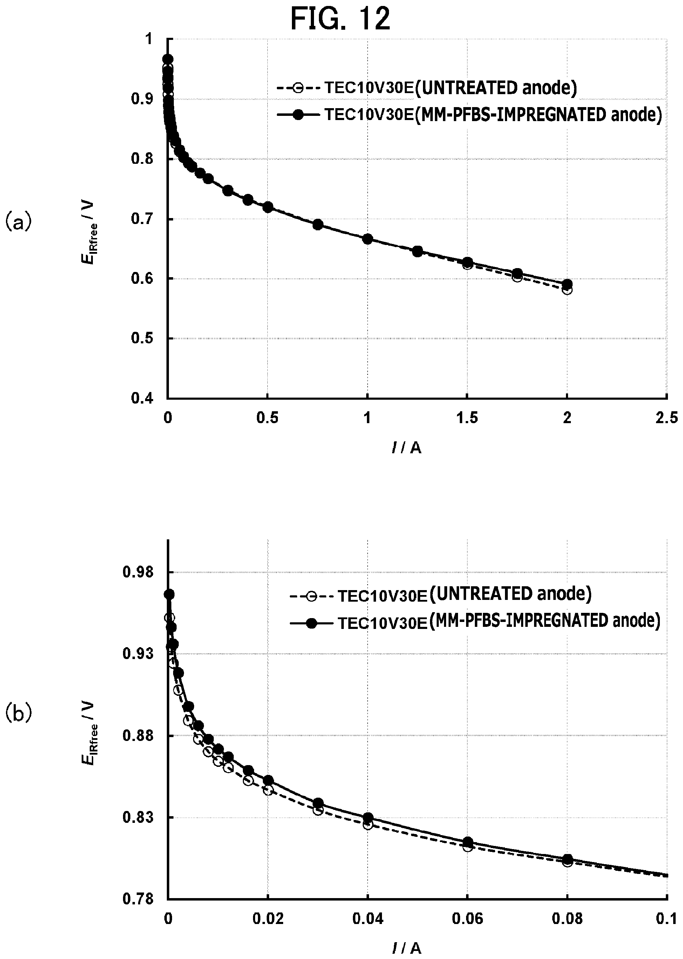

Next, each of the MEAs of Example 2-1 and Reference Example 2 was evaluated for a current-voltage property after constant voltage operation at 0.5 V for 10 minutes, constant voltage operation at 0.4 V for 10 minutes, and constant voltage operation at 0.3 V for 10 minutes sequentially while supplying 209 sccm of oxygen gas to the cathode electrode and 209 sccm of pure hydrogen gas to the anode electrode. FIG. 12(a) shows current-voltage curves (Current-voltage curve 3) for the MEAs of Example 2-1 and Reference Example 2 as evaluated as described above. FIG. 12(b) shows the current-voltage curves in FIG. 12(a) in a low current density region. FIG. 22 shows the current-voltage curves per unit mass of platinum in FIG. 12(a) in a low current density region.

As shown in FIGs. 12(a), 12(b), and 22, a cell voltage of the MEA of Example 2-1, in which the anode catalyst layer was impregnated with the melamine-based compound, was higher than that of the MEA of Reference Example 2, in which the anode catalyst layer was not impregnated with the melamine-based compound, especially in the low current density region. From the above, the cell property of the MEA was able to be improved over a longer period of time by impregnating the anode catalyst layer with the melamine-based compound since the melamine-based compound continues to be supplied from the anode catalyst layer to the cathode catalyst layer through the electrolyte membrane.

A method for incorporating the melamine-based compound into the anode catalyst layer is not limited thereto. An ink for an anode catalyst may be produced after the melamine-based compound is supported on catalyst powder. An example of such a case will be described below. First, 250 mg of platinum catalyst particles (TANAKA PRECIOUS METAL TECHNOLOGIES Co., Ltd., TEC10E50E), in which platinum is supported on a carbon support, were suspended in a mixed liquid of 2-propanol and a 1 mM PFBS aqueous solution containing 50 µmol of octylmelamine (OM) (Koyo Chemical Company Limited), refluxed, filtered, washed, and dried to obtain OM-supported catalyst particles.

Then, 450 mg of a mixed liquid of water and 1-propanol at a mass ratio of 3:1 and 110 mg of an ionomer (FUJIFILM Wako Pure Chemical Corporation, DE2020) were added to 50 mg of the OM-supported catalyst particles, and the resultant was dispersed with ultrasonication and stirred to obtain an ink for an anode catalyst. The ink for an anode catalyst was applied to a PTFE sheet (Nitto Denko Corporation) at a thickness of 120 µm and vacuum-dried at 100°C to obtain an anode catalyst sheet. The anode catalyst layer was obtained by cutting the anode catalyst sheet into a piece of 10 mm in length and 10 mm in width.

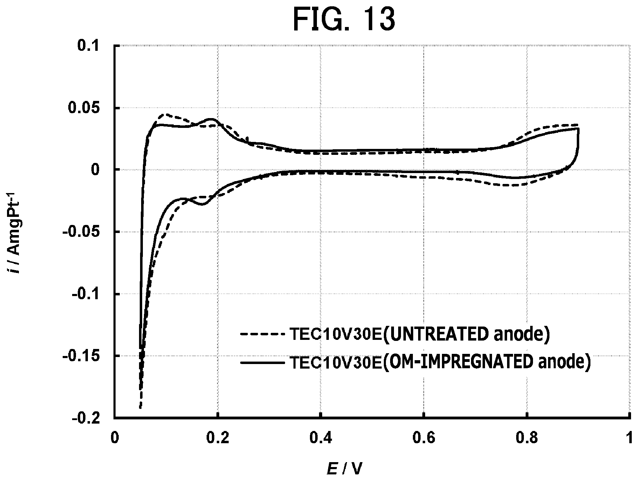

Thereafter, an MEA of Example 2-2 containing OM in the anode catalyst layer was obtained in the same manner as for the MEA of Example 2-1. A ratio of a mass of the OM to a mass of platinum in the platinum catalyst particles included in the cathode catalyst layer of the MEA of Example 2-2 was 0.029. CV3 of the MEA of Example 2-2 was obtained in the same manner as the evaluation of the MEAs of Example 2-1 and Reference Example 2. FIG. 13 shows cyclic voltammograms (CV3) per unit mass of platinum for the MEA of Example 2-2 ("TEC10V30E (OM-impregnated anode)" in the figure) and the MEA of Reference Example 2 as evaluated as described above.

As shown in FIG. 13, a waveform of the cyclic voltammogram for the MEA of Examples 2-2 is clearly different from a waveform of the cyclic voltammogram for the MEA of Reference Example 2. This change in waveform is believed to result from adsorption of the melamine-based compound on the cathode catalyst layer. This means that even when the anode catalyst layer is impregnated with a melamine-based compound with relatively high lipid solubility such as OM, such a melamine-based compound is supplied to the cathode catalyst layer.

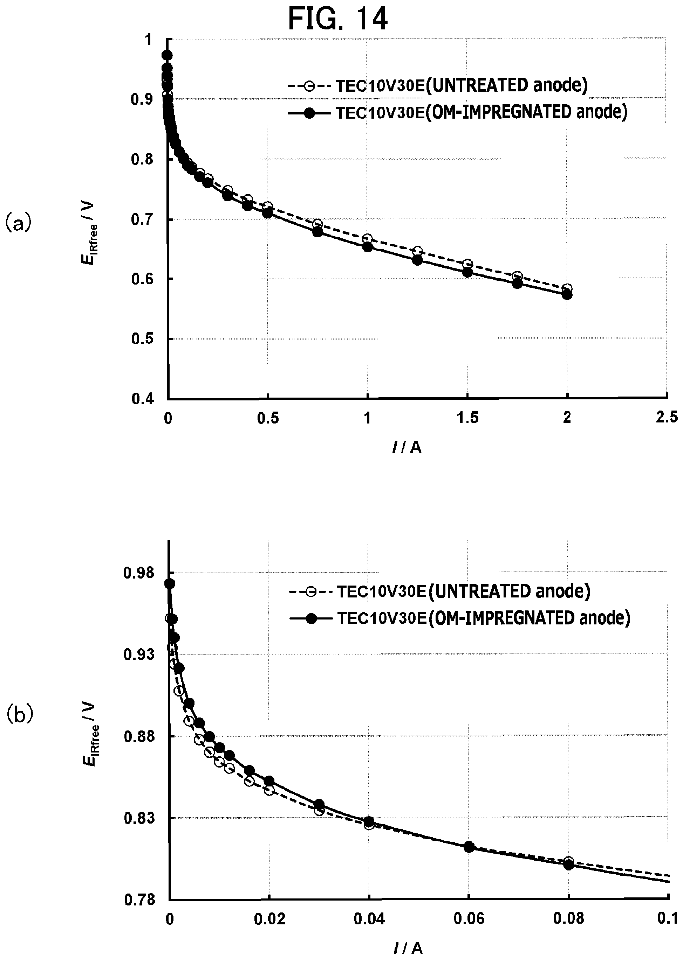

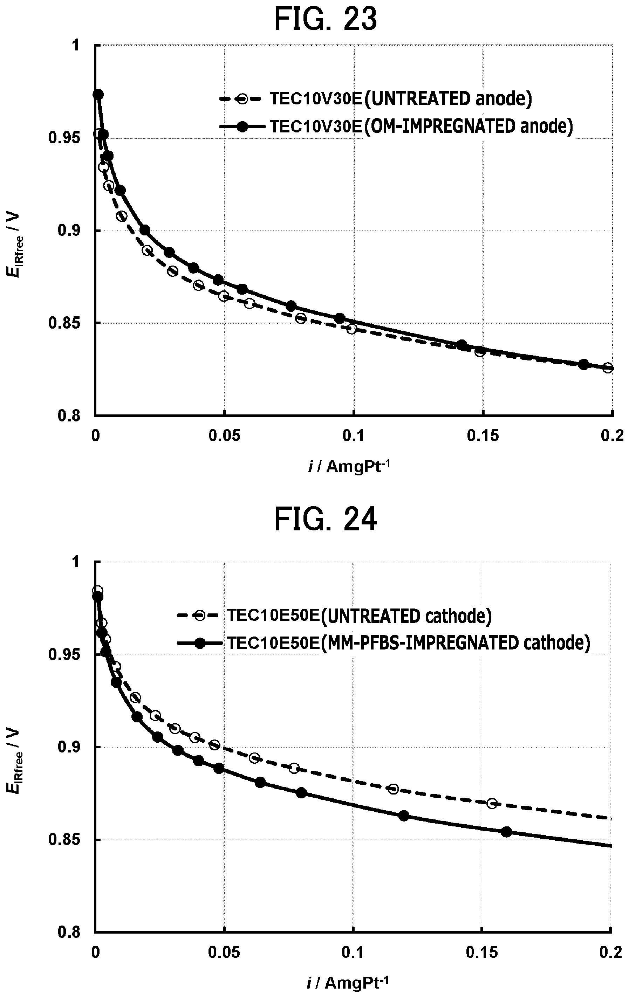

The MEAs of Example 2-2 and Reference Example 2 were evaluated for a current-voltage property in the same manner as the evaluation of the MEAs of Example 2-1 and Reference Example 2. FIG. 14(a) shows current-voltage curves (Current-voltage curve 3) for the MEAs of Example 2-2 and Reference Example 2 as evaluated as described above. FIG. 14(b) shows the current-voltage curves in FIG. 14(a) in a low current density region. FIG. 23 shows the current-voltage curves per unit mass of platinum in FIG. 14(a) in a low current density region. As shown in FIGs. 14(a), 14(b), and 23, a cell voltage of the MEA of Example 2-2, in which the anode catalyst layer was impregnated with the melamine-based compound, was higher than that of the MEA of Reference Example 2, in which the anode catalyst layer was not impregnated with the melamine-based compound, especially in the low current density region.

### (Comparative Example: Cathode catalyst layer containing melamine-based compound)

An MEA of Comparative Example including a cathode catalyst layer that was impregnated with MM-PFBS serving as a melamine-based compound and an anode catalyst layer that was not impregnated with a melamine-based compound was obtained in the same manner as for the MEA of Example 2-1, except that the anode catalyst layer and the cathode catalyst layer in Example 2-1 were switched. A ratio of a mass of the ionomer to a total mass of the carbon support in the platinum catalyst particles included in the anode catalyst layer was 0.83. A ratio of a total mass of MM and PFBS to a mass of platinum in the platinum catalyst particles included in the cathode catalyst layer of the MEA of Comparative Example was 0.053. A Pt mass per unit area of the anode catalyst layer in the MEA of Comparative Example was 0.251 mg_{Pt}cm⁻².

An MEA of Reference Example 3 including an anode catalyst layer and a cathode catalyst layer that were not impregnated with a melamine-based compound was obtained in the same manner as for the MEA of Reference Example 2, except that the anode catalyst layer and the cathode catalyst layer in Reference Example 2 were switched. A Pt mass per unit area of the anode catalyst layer in the MEA of Reference Example 3 was 0.260 mg_{Pt}cm⁻². CV3 of the MEAs of Comparative Example and Reference Example 3 was obtained in the same manner as the evaluation of the MEAs of Example 2-1 and Reference Example 2.

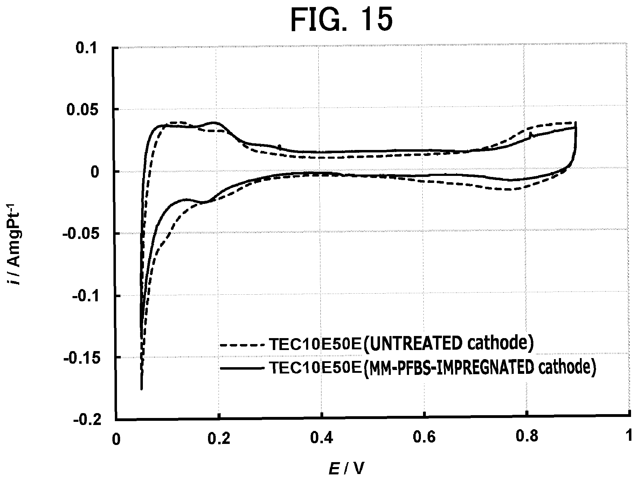

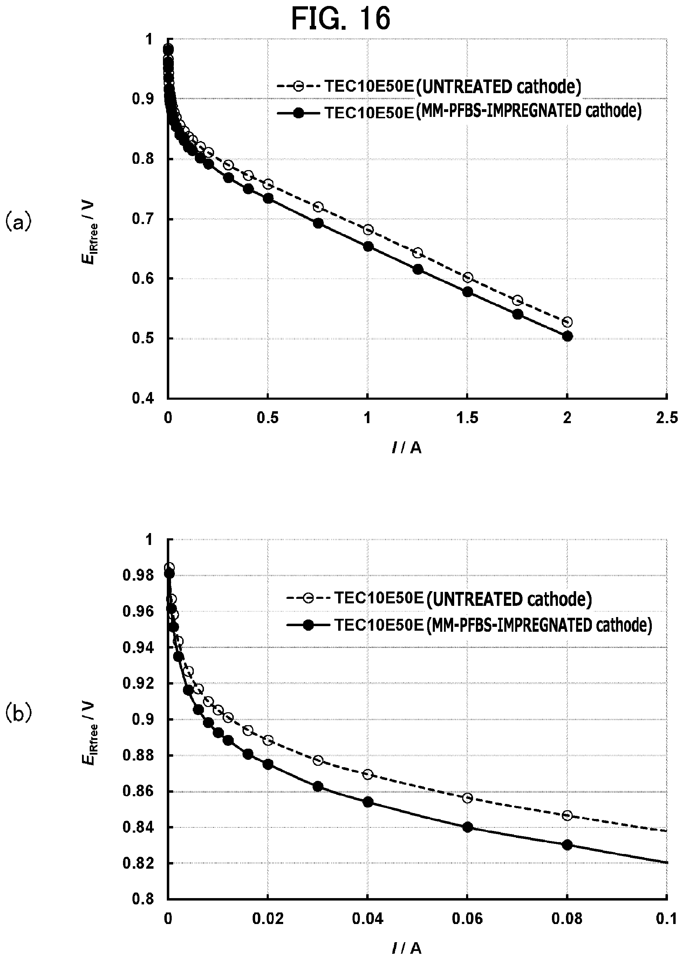

FIG. 15 shows cyclic voltammograms (CV3) per unit mass of platinum for the MEA of Comparative Example ("TEC10E50E (MM-PFBS-impregnated cathode)" in the figure (the same applies to FIGs. 16(a), 16(b)), and 24)) and the MEA of Reference Example 3 ("TEC10E50E (untreated cathode)" in the figure (the same applies to FIGs. 16(a), 16(b), and 24)) as evaluated as described above. As shown in FIG. 15, a waveform of the cyclic voltammogram for the MEA of Comparative Example is clearly different from a waveform of the cyclic voltammogram for the MEA of Reference Example 3. This change in waveform is believed to result from adsorption of the melamine-based compound included in the cathode catalyst layer on the platinum in the cathode catalyst layer.

The MEAs of Comparative Example and Reference Example 3 were evaluated for a current-voltage property in the same manner as the evaluation of the MEAs of Example 2-1 and Reference Example 2. FIG. 16(a) shows current-voltage curves (Current-voltage curve 3) for the MEAs of Comparative Example and Reference Example 3 as evaluated as described above. FIG. 16(b) shows the current-voltage curves in FIG. 16(a) in a low current density region. FIG. 24 shows the current-voltage curves per unit mass of platinum in FIG. 16(a) in a low current density region.

As shown in FIGs. 16(a), 16(b), and 24, a cell voltage of the MEA of Comparative Example, in which the cathode catalyst layer was impregnated with the melamine-based compound, was lower than that of the MEA of Reference Example 3, in which the cathode catalyst layer was not impregnated with the melamine-based compound. When the cathode catalyst layer is impregnated with the melamine-based compound, the melamine-based compound is excessively supplied to platinum in the cathode catalyst layer, which inhibits a catalytic function of the platinum and prevents a cell voltage of the MEA from increasing in a full current density region.

## Claims

1. A membrane electrode assembly comprising:
a cathode gas diffusion layer;
a cathode catalyst layer;
a solid polymer electrolyte membrane;
an anode catalyst layer; and
an anode gas diffusion layer,
the cathode catalyst layer comprising platinum-containing catalyst particles,
at least one of the cathode gas diffusion layer, the anode catalyst layer, or the anode gas diffusion layer comprising one or more melamine-based compounds of a compound represented by Chemical Formula (1) below, a salt of the compound, or a polymer of the compound: 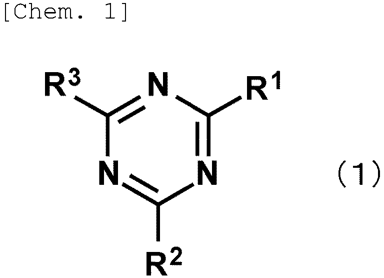
wherein R¹ to R³ are each independently an amino group, an alkyl group, an alkylamino group, a thioalkylamino group, or an alkylamino sulfonic acid group.

2. The membrane electrode assembly according to claim 1,
wherein only the cathode gas diffusion layer comprises the melamine-based compound.

3. The membrane electrode assembly according to claim 1,
wherein only the anode catalyst layer comprises the melamine-based compound.

4. The membrane electrode assembly according to claim 1,
wherein a ratio of a mass of the melamine-based compound to a mass of platinum comprised in the cathode catalyst layer is 0.5% to 20%.

5. The membrane electrode assembly according to any one of claims 1 to 4,
wherein the melamine-based compound is one or more of acetoguanamine, a melamine monomer, or octylmelamine.

6. A polymer electrolyte fuel cell comprising:
a membrane electrode assembly according to any one of claims 1 to 4;
a cathode separator; and
an anode separator.

7. A polymer electrolyte fuel cell comprising:
a membrane electrode assembly according to claim 5;
a cathode separator; and
an anode separator.
